Europäisches Patentamt

(19) European Patent Office

Office européen des brevets

(11) **EP 1 427 557 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(21) Anmeldenummer: 02777065.0

(22) Anmeldetag: **11.09.2002**

(51) Int Cl.⁷: **B23D 37/00**, B23B 1/00

(86) Internationale Anmeldenummer:
**PCT/EP2002/010202**

(87) Internationale Veröffentlichungsnummer:
**WO 2003/022497 (20.03.2003 Gazette 2003/12)**

(54) **VERFAHREN ZUR DRALLFREIEN SPANENDEN BEARBEITUNG VON ROTATIONSSYSMMETRISCHEN FLÄCHEN**

METHOD FOR TWIST-FREE CUTTING OF ROTATIONAL SYMMETRIC SURFACES

PROCEDE D'USINAGE PAR ENLEVEMENT DE COPEAUX SANS DEVIATION, DE SURFACES A SYMETRIE DE REVOLUTION

(84) Benannte Vertragsstaaten:
**AT DE ES FR GB IT**

(30) Priorität: **11.09.2001 DE 10144649**

(43) Veröffentlichungstag der Anmeldung:
**16.06.2004 Patentblatt 2004/25**

(73) Patentinhaber: BOEHRINGER
WERKZEUGMASCHINEN GmbH
D-73033 Göppingen (DE)

(72) Erfinder:
• SCHREIBER, Leo
73529 Schwäbisch-Gmünd (DE)
• RIEGEL, Adrian
73033 Göppingen (DE)
• KOHLHASE, Matthias
78713 Schramberg-Sulgen (DE)

(74) Vertreter: **Strych, Werner Maximilian Josef et al**
Hansmann & Vogeser,
Patent- und Rechtsanwälte,
Albert-Rosshaupter-Strasse 65
81369 München (DE)

(56) Entgegenhaltungen:
EP-A- 0 976 484                WO-A-01/43902
DE-A- 10 037 974              DE-C- 4 119 162
US-A- 3 878 742               US-A- 5 373 631

• PATENT ABSTRACTS OF JAPAN vol. 010, no. 062 (M-460), 12. März 1986 (1986-03-12) -& JP 60 207701 A (TOSHIBA KK), 19. Oktober 1985 (1985-10-19)
• DATABASE WPI Section PQ, Week 197707 Derwent Publications Ltd., London, GB; Class P54, AN 1977-B4156Y XP002227462 -& SU 518 275 A (MOSCOW BAUMAN TECH COLL), 9. Juli 1976 (1976-07-09)
• PATENT ABSTRACTS OF JAPAN vol. 012, no. 490 (M-779), 21. Dezember 1988 (1988-12-21) -& JP 63 212401 A (MITSUBISHI MOTORS CORP), 5. September 1988 (1988-09-05)
• ERMAKOV Y M: "MACHINING TECHNOLOGY. INTERPLAY OF CUTTING METHODS AS A MACHINING DEVELOPMENT BASE" RUSSIAN ENGINEERING RESEARCH, ALLERTON PRESS, NEW YORK, US, Bd. 16, Nr. 2, 1996, Seiten 87-92, XP000679789 ISSN: 1068-798X
• DATABASE WPI Section PQ, Week 198031 Derwent Publications Ltd., London, GB; Class P54, AN 1980-G7300C XP002227463 -& SU 703 240 A (KHMELNIK SERVICING), 18. Dezember 1979 (1979-12-18)
• DATABASE WPI Section PQ, Week 198722 Derwent Publications Ltd., London, GB; Class P54, AN 1987-155873 XP002227464 -& SU 1 263 427 A (TBILISI MACH TOOL), 15. Oktober 1986 (1986-10-15)

## Beschreibung

### I. Anwendungsgebiet

Die Erfindung betrifft die spanende Bearbeitung von sich drehenden, insbesondere zentrischen, rotationssymmetrischen Flächen eines metallischen Werkstücks, insbesondere aus Stahl oder aus Grauguß, auch in gehärtetem Zustand mittels geometrisch bestimmter Schneide bzw. Schneiden.

### II. Technischer Hintergrund

Die Drehbearbeitung von rotationssymmetrischen Teilen sowohl im weichen als auch im gehärteten Zustand mit geometrisch bestimmter Schneide ist Stand der Technik. Teilweise werden dabei die Verfahren Schleifen, Finishen, Honen und ähnliche Verfahren substituiert.

Schneidstoffe, die eine ausreichende Lebensdauer, auch für die Bearbeitung gehärteter Werkstücke, bieten, stehen inzwischen in unterschiedlichen Ausführungsformen zur Verfügung.

Eine Bearbeitung nach dem Härten ist in der Regel notwendig, auch wenn die Vorbearbeitung mit hoher Präzision erfolgt, da nach dem Härteprozeß in der Regel zum Teil erhebliche Härteverzüge auftreten. Ein Prozeß, der die Meßgenauigkeit des Werkstückes wieder herstellt, ist somit unerläßlich.

Längsdrehen erzeugt stets eine Oberfläche, die drallbehaftet ist, und zwar gleichgültig, welches Material bearbeitet wird bzw. ob dieses gehärtet oder ungehärtet ist.

Diese Oberfläche weist regelmäßige Strukturen auf (Riefen oder gratförmige Erhebungen), die einer Gewindestruktur (Drall) entsprechen und durch den Vorschub des Werkzeuges entlang dem rotierenden Werkstück eine Steigung erzeugen.

Dies gilt gleichermaßen für zylindrische, kegelige oder anders geformte Werkstückoberflächen. Es liegen also beispielsweise Formen eines Gewindes oder Teilstücke hiervon auf der zu erzielenden Oberfläche des Werkstückes vor.

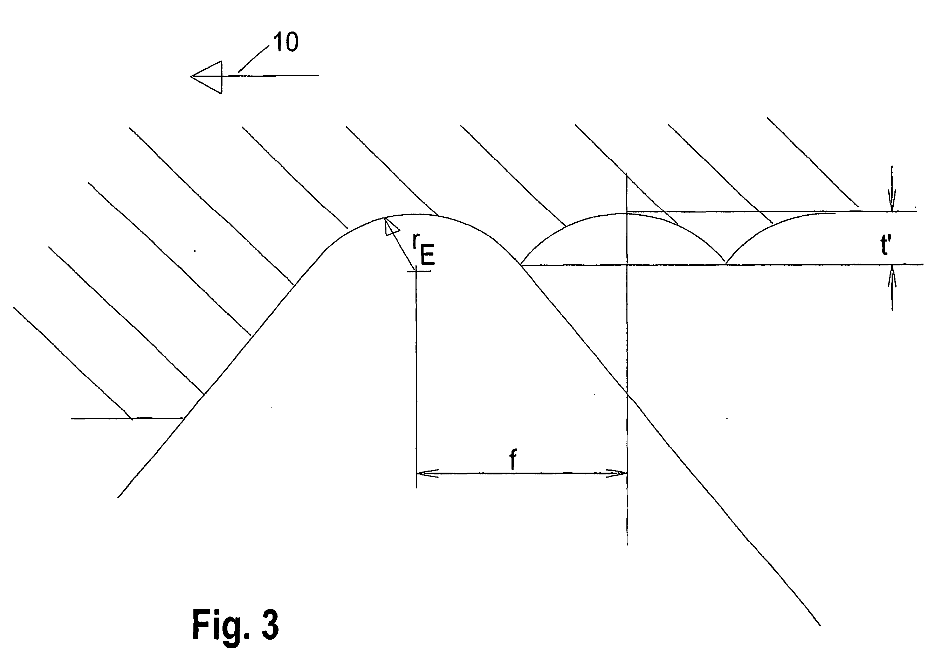

Der formelmäßige Zusammenhang, der die Gewindetiefe bzw. Rauheit der gewindeartigen Struktur beschreibt, ist in Fig. 3 erläutert.

Da die Zerspanungsraten - insbesondere bei gehärteten Werkstücken für hohe Oberflächengüten - in der Regel sehr klein sind, kommt es häufig zu einem relativ langsamen Bearbeitungsfortschritt bzw. einer geringen Zerspanungsleistung.

Während die relativ geringe Zerspanungsleistung einen deutlichen wirtschaftlichen Nachteil bedeutet, bereiten die drallbehafteten Oberflächen technische Probleme bei hierauf anliegenden Dichtungen, insbesondere, wenn sie sich relativ zu der Oberfläche bewegen, zum Beispiel eine drehende Welle innerhalb einer stehenden Dichtung. Dichtungen in diesem Sinne können etwa die bekannten Radialwellendichtringe sein.

Eine derart drallbehaftete Oberfläche fördert mittels der gewindeförmigen Riefen bzw. Grate entlang der Oberfläche Kühlmittel, Schmiermittel, etc. an der anliegenden Dichtung vorbei, von der einen zur anderen Seite in Axialrichtung, so daß die Dichtwirkung der Dichtung erheblich reduziert wird. Insbesondere bei Maschinen, die z. B. aus hygienischen oder auch aus Umweltschutzgründen ohne Leckage laufen müssen, stellt dies ein ernstzunehmendes Problem dar.

Zusätzlich werden die an der drallbehafteten Oberfläche anliegenden Dichtungselemente an den Berührungslinien oder -flächen durch diese gewindeförmigen Riefen oder Erhebungen vielfach mit der Zeit beschädigt, oder zumindest stark abrasiv beansprucht. Durch diese Abnutzung oder Beschädigung wird ebenfalls oft nach kurzer Zeit die Dichtwirkung erheblich herabgesetzt oder aufgehoben.

Betrachtet man die zur Verfügung stehenden spanenden Bearbeitungsverfahren am rotierenden Werkstück unter Betrachtung dieser beiden Problemstellungen, so ergibt sich folgendes Bild:

Versucht man beim Drehen von rotationssymmetrischen Flächen die gewindeförmige Ausbildung dadurch zu vermeiden, daß das Werkzeug bezüglich des Werkstückes nur radial (Einstechdrehen) bewegt wird, so entsteht wegen der fehlenden Axialbewegung eine drallfreie Oberfläche. Wenn jedoch die Einstech-schneide in axialer Richtung so breit ist wie die insgesamt herzustellende rotationssymmetrische Fläche, treten, besonders bei der Bearbeitung von gehärteten Oberflächen, sehr hohe Schnittkräfte auf und wegen der dynamischen Instabilität ist die Neigung zum Rattern hoch. Diese dynamischen Instabilitäten bzw. das Rattern führen fast schlagartig zu so starken Oberflächenunregelmäßigkeiten, daß hier die Oberfläche ebenfalls zur einwandfreien Abdichtung zu unregelmäßig ist.

Bewegt man den Einstechstahl zusätzlich bei breiteren herzustellenden Flächen längs, d.h. in axialer Richtung, wird wieder naturgemäß eine drallbehaftete Oberfläche erzeugt, sofern die Einstech-Schneide nicht absolut exakt parallel zur Längsrichtung steht. Erreicht man eine solche Parallelität jedoch, neigt die Schneide sofort zum rattem.

Es ist daher Stand der Technik und notwendig, daß der erzeugte Drall, insbesondere die gewindeförmigen Drehriefen mit aufwendigen nachfolgenden Zusatzverfahren ausreichend abgeschwächt oder ganz beseitigt werden müssen, um eine einwandfreie Dichtwirkung zu gewährleisten.

Eine Möglichkeit, den Drall der Oberfläche (Drehriefen) zu vermeiden, könnte das Drehräumverfahren sein, wobei das Räumwerkzeug in tangentialer Richtung am rotierenden Werkzeug vorbeibewegt wird. Sind die einzelnen Schneiden des Drehräumwerkzeuges parallel der Rotationsachse des Werkzeuges ausgerichtet, so entsteht hierbei wieder die Problematik der hohen auf die Schneide wirkenden Kräfte und damit der Hang zu dynamischen Instabilität und der Neigung zum Rattern.

Beim Drehräumen mittels eines scheibenförmigen Werkzeuges mit den Schneiden auf dem Werkzeug-Umfang kommt beim Schrägstellen der in sich geraden Schneide noch das Problem hinzu, daß dann eine ballig-konvexe statt einer exakt zylindrischen Fläche am Werkstück erzeugt wird.

Weiterhin wird vielfach als zusätzliches Verfahren das Schleifen der Oberflächen angewendet. Dies bedeutet, daß das Werkstück in der Regel auf einen anderen Maschinentyp umzulagern ist. Die Stückkosten des Werkstückes werden daher durch die Verlängerung der Prozeßkette, d.h. durch den Einsatz einer weiteren Maschine, erheblich belastet und das wirtschaftliche Ergebnis somit deutlich verschlechtert. Weiterhin soll bei der Endbearbeitung der Werkstücke nach Möglichkeit auf das Schleifen verzichtet werden, da dieses in der Regel als Naßverfahren geschieht und somit weitere Umwelt- und Entsorgungsproblematiken über den Schleifschlamm entstehen und nach heutigem Stand das wirtschaftliche Ergebnis weiter belasten.

Hinzu kommt, daß selbst beim Schleifen Drallstrukturen erzeugt werden, die zunächst durch den Abrichtvorgang auf die Schleifscheibe aufgebracht werden und sich schließlich auf dem Werkstück abbilden. Auch beim Finishen, bei dem ein Schleifband oder ein Schleifelement an das Werkstück angelegt wird, entstehen wegen der zusätzlichen Oszillation bzw. Längsbewegung des Finishwerkzeuges relativ zum Werkstück drallbehaftete Oberflächenstrukturen.

Weiterhin ist es aus der DE 199 63 897 bekannt, auf der die Oberbegriffe der Ansprüche 1 und 2 basieren, mittels einer zur Rotationsachse des Werkstückes windschiefen Schneide das Werkstück zu bearbeiten, indem es tangential am Werkstück entlang geführt wird. Durch Steuerung des Vorschubes und/oder der Schrägstellung der Schneide kann dabei die Steigung als auch die Tiefe der gewindeartigen Riefen minimiert und bei der Bearbeitung gehärteter Werkstücke die Spanungsleistung des Werkzeuges optimiert werden.

## III. Darstellung der Erfindung

### a) Technische Aufgabe

Es ist die Aufgabe gemäß der Erfindung, ein gattungsgemäßes Verfahren zur Bearbeitung von Werkstücken weiter zu optimieren.

### b) Lösung der Aufgabe

Diese Aufgabe wird durch die Merkmale der Ansprüche 1 bzw. 2 gelöst. Vorteilhafte Ausführungsformen ergeben sich aus den Unteransprüchen.

Durch die axiale Vorschub-Bewegung des Werkzeuges kann beeinflusst werden, wie groß die axiale Erstreckung der Werkstückfläche ist, die mit einer Schneide bzw. einem Werkzeug, welches mehrere Schneiden aufweisen kann, in einem bzw. mehreren Durchgängen bearbeitet werden kann.

Da hierbei die Schneide - die gerade oder gebogen sein kann - nicht mit einer Ecke auf die Drehmitte zuweisend, sondern sich windschief an den Außenumfang anschmiegend an der zu bearbeitenden Fläche anliegt, lässt sich eine Minimierung bzw. Vermeidung des Dralles erreichen.

Die Relation zwischen axialer und tangentialer Vorschubkomponente, die bei einer linearen Vorschubbewegung ein festes Verhältnis ist, beeinflusst dabei eventuell noch auftretenden restlichen Drall ebenso wie die Form der Schneide, insbesondere dann, wenn eine gebogene Schneide nicht in der Tangentialebene liegt, in welcher sie bzgl. des Werkstückes bei der Bearbeitung bewegt wird, sondern quer zu dieser Tangentialebene - welche definiert ist durch die Vorschubrichtung und die in Vorschubrichtung betrachtete Projektion der Schneidenkante - angeordnet ist.

Dadurch, dass tangentiale Bewegung und axiale Bewegung unabhängig voneinander gesteuert werden können, kann einerseits der Verschleiß entlang der Längserstreckung der Schneide gesteuert und insbesondere entlang dieser Längserstreckung gleichmäßig verteilt werden, und zum anderen - je nach Optimierungsziel - der an der bearbeiteten rotationssymmetrischen Fläche auftretende Drall hinsichtlich der Längsposition am Werkstück ebenfalls beeinflusst werden.

Mit dem erfindungsgemäßen Verfahren können nicht nur rotationssymmetrische Flächen mit gerader Mantellinie (wie Kegel ), sondern auch rotationssymmetrische Flächen mit ungerader Mantellinie, also frei geformte rotationssymmetrische Flächen hergestellt werden. Dies ist besonders deshalb von Vorteil, weil auch die frei geformten rotationssymmetrischen Flächen, also konkave oder konvexe Oberflächenformen, mittels sogar einer geraden Schneide hergestellt werden können:

Hierfür ist - bei gerader Schneide - zusätzlich zur tangentialen und axialen Bewegung während des Kontaktes zwischen Schneide und Werkstück eine radiale Bewegung zu überlagern, die ebenfalls unabhängig von den beiden anderen Komponenten gesteuert werden muss, wodurch die gewünschte Form entsteht. Bei entsprechender Formgebung der Schneide quer zur Ebene ihrer Vorschubbewegung kann die radiale Form-Komponente der Fläche statt in der zuvor geforderten radialen Zustellung (Y-Richtung) in der Form der Schneide enthalten sein.

Im Idealfall kann das Werkzeug - relativ zum Werkstück - um wenigstens eine der Querachsen (x- oder Y-Richtung) verschwenkt werden, um die Bewegungsebene der Schneide im jeweiligen Bearbeitungspunkt jeweils tangential zur dortigen Krümmung des Werkstückes zu führen. Zusammen mit einer axialen Komponente (Z-Richtung) des Vorschubes ergibt dies dann in Summe eine Schrauben-Bewegung.

Sofern mit den verfügbaren axialen Erstreckungen von Schneidplättchen die beabsichtigten axialen Längen von Werkstückflächen unter Einhaltung der gewünschten Minimierung des Dralles bzw. einer Mindeststandzeit der Schneide nicht realisierbar sind, kann die Bearbeitung der axialen Länge der Werkstückfläche aufgeteilt werden in zeitlich nacheinander oder gleichzeitig erfolgende Bearbeitungen durch verschiedene Schneiden.

Diese Schneiden können auf ein und demselben Werkzeuggrundkörper angeordnet sein, und entweder entsprechend ihrer geplanten Einsatzabfolge in Längsrichtung zueinander versetzt, insbesondere geringfügig in Längsrichtung einander überlappend, angeordnet sein, wobei ein zusätzlicher Versatz quer zur Längsrichtung nicht unbedingt notwendig ist. Die gleichzeitig oder nacheinander zum Einsatz kommenden Schneiden, seien sie auf ein und demselben Grundkörper oder auf verschiedenen Grundkörpern angeordnet, können auch unterschiedlichen Bearbeitungsstufen, beispielsweise Schruppen und Schlichten, zugeordnet sein.

Aufgrund der Steuerbarkeit des Werkzeuges in Längsrichtung ist auch eine Anordnung der verschiedenen Schneiden mit einem Versatz ausschließlich in Querrichtung ausreichend, sodass nach außer Eingriff-Bringen der ersten Schneide und vor in Eingriff-Bringen der nächsten Schneide das gesamte Werkzeug in Längsrichtung bzgl. des Werkstückes entsprechend verfahren wird.

Auch die Anordnung der verschiedenen Schneiden auf dem Umfang eines runden, insbesondere scheibenförmigen, Werkzeuggrundkörpers ist möglich, wobei während des Eingriffs der Schneide vorzugsweise der Rundvorschub des Werkzeuges stillgesetzt ist und die Werkzeugeinheit ausschließlich in einer momentan linearen Vorschubbewegung relativ zum Werkstück bewegt wird.

Dadurch, dass als ein Optimierungsziel die Gleichmäßigkeit des Verschleißes der Schneide entlang deren Längserstreckung gesteuert werden kann, ergibt sich z.B. eine zusätzliche Optimierung der Standzeit der Schneide.

Weiterhin kann mit dem erfindungsgemäßen Verfahren auch eine Oberfläche am Werkstück bearbeitet werden, innerhalb deren sich - z.B. in Längsrichtung - ein oder mehrere Übergänge von gehärtetem zu ungehärtetem Metall oder umgekehrt befindet. Derartige Übergangszonen konnten bisher nur sehr schwer bearbeitet werden, da zwar sowohl für gehärtetes als auch für ungehärtetes Metall jeweils passende Schneidstoffe bekannt waren, jedoch kein Schneidstoff beides bearbeiten konnte, ohne allzu schnell zu verschleißen.

Mit dem erfindungsgemäßen Verfahren ist jedoch möglich, mittels CBN (kubisch zentriertes Bornitrit) und/oder Hartmetall sowohl gehärtetes als auch ungehärtetes Material zu zerspanen, und auch die Übergangszonen zwischen zwei solchen unterschiedlichen Bereichen, wobei der Verschleiß der aus solchen Materialien bestehenden Schneiden bzw. Schneidplättchen im Rahmen des Üblichen bleibt. Der Grund ist darin zu sehen, dass v.a. dann, wenn bei der Vorschubbewegung immer wenigstens eine geringe tangentiale Komponente enthalten ist, ein bestimmter Punkt der Schneide immer nur über eine sehr kurze Zeit in Eingriff am Werkstück bleibt.

Ein weiterer Vorteil des erfindungsgemäßen Verfahrens besteht in der erzielbaren sehr guten Oberflächenqualität nicht nur hinsichtlich Rauheit, sondern auch hinsichtlich Rundheit der bearbeiteten Oberflächen.

**c) Ausführungsbeispiele**

Ausführungsformen gemäß der Erfindung sind im Folgenden beispielhaft näher beschrieben. Es zeigen:

Fig. 1:    Eine perspektivische Darstellung der Bearbeitungssituation,

Fig. 2:    Eine Darstellung der Situation der Fig. 1 quer zur Rotationsrichtung 10 und zur Vorschubbewegung 3, und

Fig. 3:    Eine Darstellung der Situation beim Längsdrehen

zwecks Erläuterung des Standes der Technik, und als erfindungsgemäße Lösungen

Fig. 4, 4a:    die perspektivische Darstellung einer anderen Bearbeitungssituation,

Fig. 4b:    die Situation gemäß Figur 4a in radialer Aufsicht,

Fig. 4c:    eine andere Situation in radialer Aufsicht,

Fig. 4d:    eine weitere Situation in radialer Aufsicht, und

Fig. 5:    Werkzeuge mit mehreren Schneiden, jeweils betrachtet in radialer Aufsicht.

Zunächst ist in Fig. 3 dargestellt, wie sich z. B. beim Längsdrehen durch den in Rotationsrichtung des Werkstückes bewegenden Schneidstahl und dessen Schneidenrundung $r_E$ eine gewindeartige Oberfläche ergibt:

Bei gleichbleibendem Vorschub f, ausgedrückt in mm/Umdrehung des Werkstückes, entsteht eine helixförmige Riefe 5, deren Windungs-Abstand in Richtung der Rotationsachse 10 bei gleichbleibendem Vorschub f konstant ist. Die Tiefe t' dieser Riefen hängt dabei ersichtlich von der Größe des Eckenradius $r_E$ der erzeugenden Schneide ab: Je größer dieser Eckenradius $r_E$ ist, um so flacher fallen die Flanken der Riefe aus und damit wird die Tiefe t' um so geringer. Der formelmäßige Zusammenhang lautet:

$$t = \frac{f^2}{8 \cdot r_E}$$

In der Einstellung wenigstens einer der Kanten der Schneide, insbesondere der Nebenschneide, die zur Schneidenecke hinführen, in möglichst geringem Winkel, vorzugsweise parallel, zur Richtung der Rotationsachse 10, liegt dabei in der Regel die einzige gangbare Möglichkeit, um die Tiefe t' zu minimieren, da der Vorschub f aufgrund vorgegebener Taktzeiten etc. in der Produktion nicht beliebig reduziert werden kann.

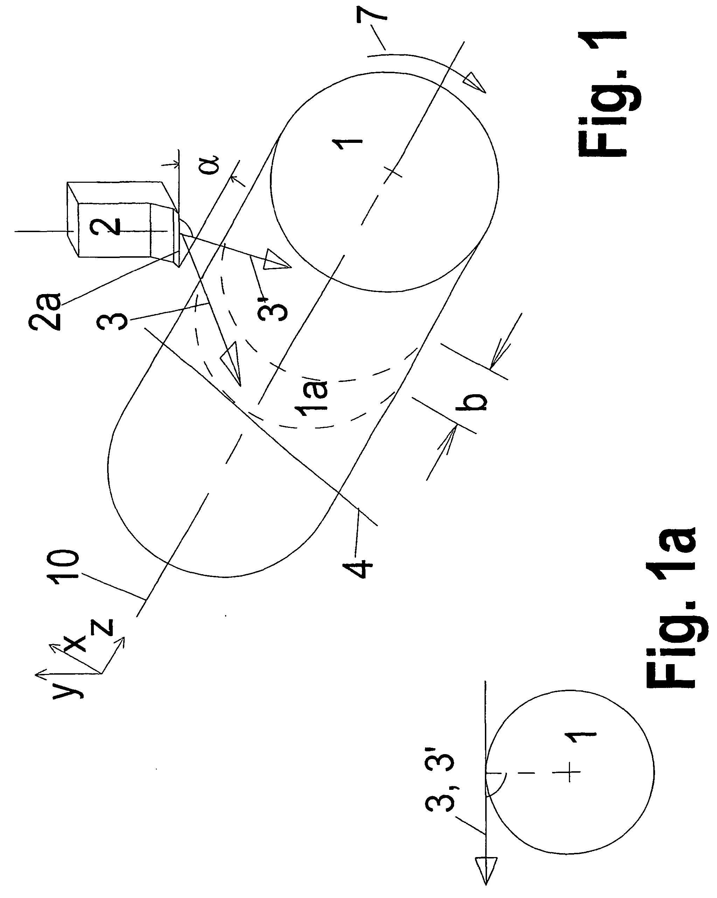

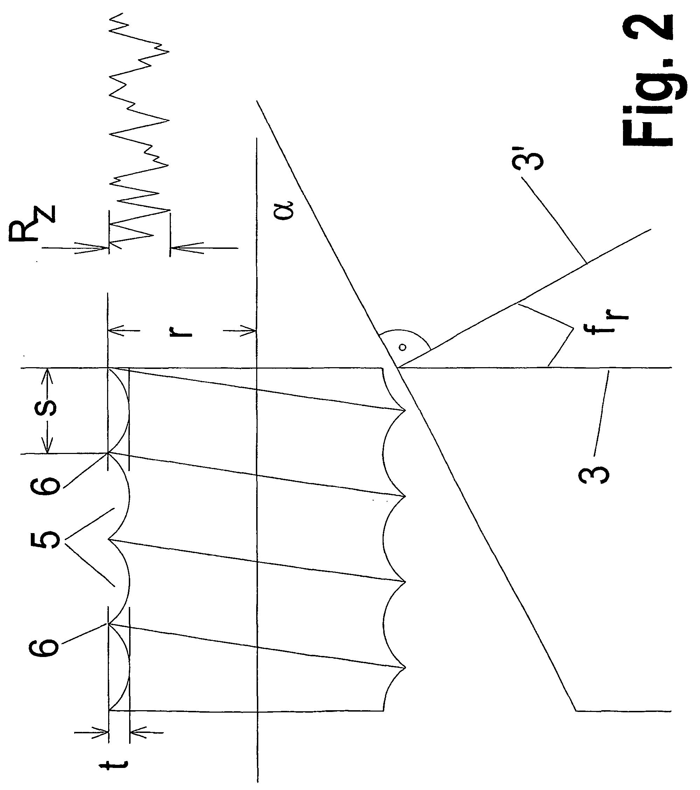

Die Figuren 1 und 2 zeigen die Situation beim Tangentialdrehen:

Wie Fig. 1 zeigt, rotiert das Werkstück 1, an dem sich die zu bearbeitende rotationssymmetrische Fläche 1a befindet, um die Rotationsrichtung 10, bei Drehmaschinen oder Drehräummaschinen üblicherweise als Z-Richtung bezeichnet, auf denen die X- und Y-Richtung üblicherweise jeweils lotrecht stehen.

Die zu bearbeitende rotationssymmetrische Fläche 1a besitzt in Z-Richtung 10 eine Breite b, und soll in der Regel als Anlagefläche für einen Radialwellendichtring oder vergleichbares Element bei der späteren Anwendung dienen.

Das Werkzeug 2 wird mit seiner schräg zur Z-Richtung stehenden Schneide 2a in einer Vorschubrichtung 3, die parallel zu einer der Tangentenflächen an der rotationssymmetrischen Fläche 1a ist, so quer zur Richtung der Rotationsachse 10 am Werkstück entlang geführt, dass die einzelnen Schneidenbereiche nacheinander mit in Z-Richtung unterschiedlichen Bereichen der rotationssymmetrischen Fläche 1a in Berührung kommen, wobei die Erstreckung der Schneide 2a in Richtung der Rotationsachse, also in Rotationsrichtung 10, gleich oder größer der Breite b der zu bearbeitenden Fläche a ist. Die Vorschubrichtung 3 des Werkzeuges kann dabei in einer Ebene liegen, die lotrecht zur Rotationsrichtung 10 des Werkstückes ist, also in einer Radialebene des Werkstückes, oder in einer schräg zur Rotationsrichtung 10 liegenden Ebene (Vorschubrichtung 3').

Betrachtet in Rotationsrichtung 10 des Werkstückes stellt (siehe Fig. 1a) die Vorschubrichtung 3 bzw. 3' jedoch immer eine Tangente an den Soll-Durchmesser der zu bearbeitenden rotationssymmetrischen Fläche dar.

Das Werkstück 1 rotiert während der Bearbeitung in einer Drehrichtung 7 so, dass im Kontaktbereich zwischen Schneide 2a und zu bearbeitender Fläche 1a die Oberfläche des Werkstückes 1 gegen die Schneide 2a läuft.

Die Aufsicht in Y-Richtung der Fig. 2 zeigt den Schrägstellungswinkel α der Schneide 2a gegenüber der Rotationsrichtung 10 des Werkstückes 1 und die in der Aufsicht im rechten Winkel zu dieser Rotationsrichtung verlaufende Vorschubbewegung 3 der Schneide 2a.

Auf Grund der vom rechten zum linken Eck der Schneide 2a der Fig. 2 bei der Bearbeitung ablaufenden Schälbewegung ergibt sich die gewindeartige Oberflächenstruktur gemäß Fig. 2. Diese Oberflächenstruktur wird gebildet durch eine gewindeartige Riefe 5, deren einzelne Windungen unmittelbar in Längsrichtung des Werkstückes aneinander angrenzen, und zwischen sich einen Gewindegrat 6 bilden.

Die Riefen 5 sind gegenüber der Realität stark übertrieben dargestellt. Die Tiefe der Riefe 5 wird als Dralltiefe t bezeichnet, während der in Rotationsrichtung 10 gemessene Abstand zwischen zwei Windungen des Grates 6 bzw. der Riefen 5 als Drallsteigung s bezeichnet wird.

Die Schneide 2a kann auch entlang einer Vorschubbewegung 3', die quer zur Rotationsachse 10 und insbesondere lotrecht auf der Schneide 2a steht, bezüglich des Werkstückes 1 bewegt werden, wobei dann eine etwas geringere Breite der Schneide 2a erforderlich ist.

Die Drallsteigung s hängt von dem Vorschub f, der den Fortschritt in Vorschubrichtung 3, gemessen in Millimetern pro Umdrehung des Werkstückes angibt, und von dem Schrägstellungswinkel α wie folgt ab:

$$S = \frac{f}{\tan \alpha}$$

Die Dralltiefe t hängt vom bis zu den Tälern zwischen den Graten 6 gemessenen Radius (Kerndurchmesser) des Werkstückes an der zu bearbeitenden Fläche 1a und dem Vorschub f wie folgt ab:

$$t = -r + \sqrt{r^2 + \frac{f^2}{4}}$$

Auf Grund der Darstellung der Fig. 2 wird klar, dass bei Erreichen einer Dralltiefe t = 0 oder wenigstens t < 1 μm, insbesondere t < 0,4 μm, insbesondere t < 0,2 μm die Größe der Drallsteigung s keine Rolle mehr spielt.

In erster Linie wird daher beabsichtigt, den Vorschub f so niedrig wie möglich zu halten, insbesondere so niedrig, daß die Dralltiefe t wesentlich kleiner, insbesondere mindestens um den Faktor 3, besser um den Faktor 5, kleiner, als die Rauhtiefe $R_z$ der so erzeugten Oberfläche wird. Die Rauhtiefe $R_z$ liegt üblicherweise im Bereich zwischen 1,5 μm und 6 μm.

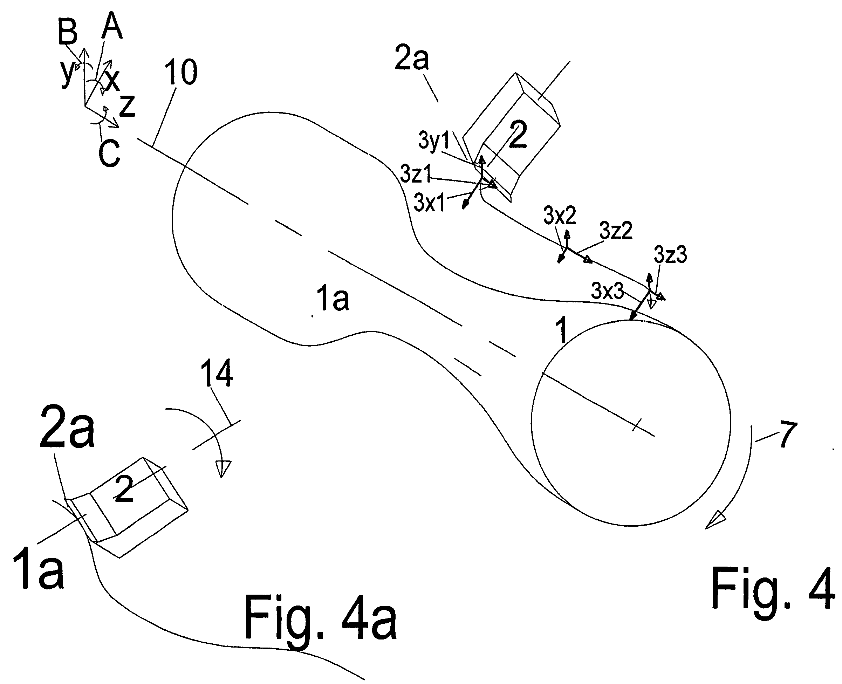

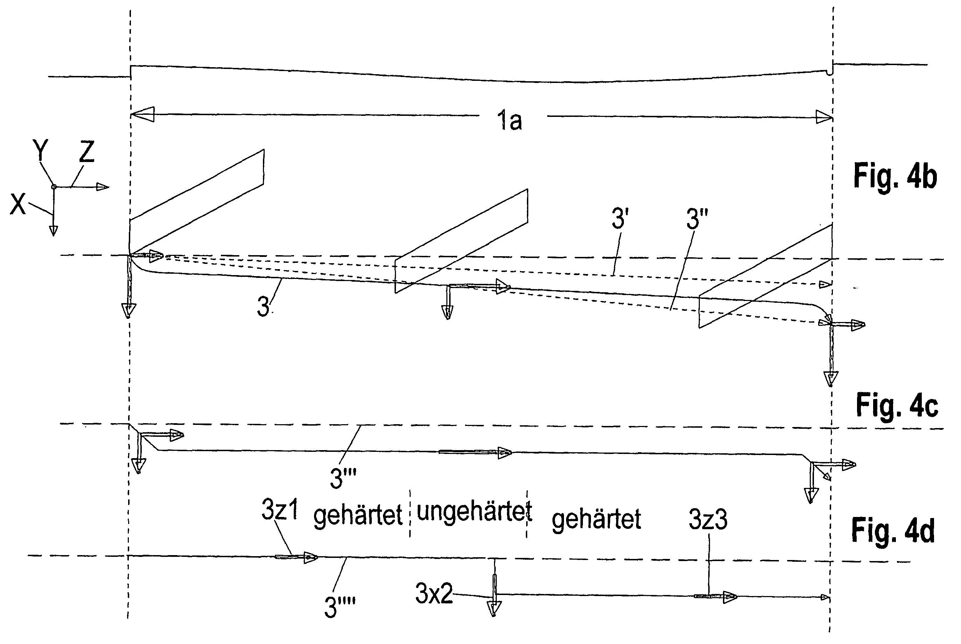

Die erfindungsgemäße Lösung in Fig. 4 zeigt, dass mittels einer windschief angeordneten, insbesondere geraden, Schneide mit der beschriebenen Methode auch rotationssymmetrische Flächen 1a hergestellt werden können, die keine geraden, sondern gekrümmte Mantellinien aufweisen, wie die konkav gekrümmte Mantellinie bzw. Fläche 1a des Werkstückes 1 gemäß Fig. 4.

Hierfür muss die Vorschubbewegung 3 eine radial zur Rotationsachse 10 hin gerichtete Bewegungskomponente 3y umfassen.

Wie die radiale, in Y-Richtung betrachtete, Aufsicht auf die Bearbeitungssituation der Fig. 4 in Fig. 4b zeigt, kann während der Bearbeitung dieser Fläche 1a die tangentiale Komponente 3x zur axialen Komponente 3z in einem immer gleichen, fest stehenden Verhältnis verbleiben, wodurch sich in der Aufsicht der Fig. 4b eine lineare Vorschubbewegung 3', 3'', ergibt.

Bevorzugt jedoch wird sich dieses Verhältnis 3y/3z im Verlauf des axialen Bearbeitungsfortschritts geändert, so dass sich auch in der Aufsicht keine lineare Vorschubbewegung mehr ergibt. Durch diese unabhängige Steuerung der tangentialen und der axialen Komponente können auch die Tangentialkräfte sowie die Radialkräfte, die auf das Werkzeug wirken, weitestgehend unabhängig voneinander gesteuert werden. Dadurch lässt sich beispielsweise die Standzeit der Schneide 2a optimieren und/oder die Oberflächengüte und/oder die Drallminimierung.

Ein typischer Fall (Fig. 4b) sieht so aus, dass zu Beginn des Schneideneinsatzes die tangentiale Komponente 3x vergleichsweise groß ist, um die Belastung des Beginns der Schneide 2a zu minimieren.

Im mittleren Bereich der axialen Erstreckung der Fläche 1a wird die axiale Komponente 3z der Vorschubbewegung deutlich vergrößert, soweit es die vorgegebenen Ziele - sei es entweder die Minimierung des Dralles oder der Verschleiß der Schneide im mittleren Bereich der Schneide 2a - zulassen.

Gegen Ende der Bearbeitung, also gegen Ende der axialen Erstreckung der Fläche 1a, wird beispielsweise die tangentiale Komponente 3x wieder zugunsten der axialen Komponente 3z vergrößert, um wiederum den Verschleiß des diesmal anderen Endes der Schneide 2a gering zu halten.

Fig. 4c zeigt jedoch auch einen Bearbeitungsablauf, bei dem zu Beginn der Bearbeitung die Vorschubbewegung 3, 3' zunächst sowohl eine axiale Komponente 3z als auch eine tangentiale Komponente 3x aufweist, dann in einem relativ großen mittleren Bereich nur axial bewegt wird (3z) und erst gegen Ende des Vorschubes wieder eine tangentiale Komponente 3x hinzukommt. Dies ist typisch für eine Situation, bei der mit einer einzigen Schneide 2a eine in axialer Richtung sehr lange Werkstückfläche 1a bearbeitet werden soll.

Dagegen zeigt Fig. 4d etwa den umgekehrten Fall:

Bei dieser Vorschubbewegung 3'''' wird das Werkzeug sowohl am Beginn als auch am Ende des Vorschubes über relativ große Bereiche ausschließlich axial (3z1, 3z3) bewegt. Lediglich im mittleren Bereich erfolgt eine Bewegung des Werkzeuges auch oder nur in tangentialer Richtung (3x2). Dies wäre der typische Ablauf für den Fall, dass in diesem mittleren Bereich ungehärtetes Material vorliegt, während die Anfangs- und Endbereiche gehärtet sind, und die Schneide 2a aus CBN oder Hartmetall besteht, und deshalb im ungehärteten Bereich ein Punkt der Schneide 2a nur über jeweils möglichst kurze Zeit im Eingriff bleiben soll.

Zusätzlich ist - je nach Form der herzustellenden Fläche - die Überlagerung einer radialen Komponente y notwendig, die ebenfalls separat steuerbar sein muss, u.a. abhängig von der sich ändernden Bewegungsgeschwindigkeit in axialer Richtung 3z.

Um vor allem in konvexen Bereichen der herzustellenden Fläche eine Einstellung der Bewegungsebene der Schneide auf die Tangentialebene zum jeweiligen Bearbeitungspunkt zu ermöglichen, wird vorzugsweise die Schneide 2a um eine Schwenkachse 14 verschwenkt, die Komponenten der X-, Y- und/oder Z-Richtung enthalten kann, und insbesondere parallel zur X-Richtung liegt, wie Fig. 4a zeigt.

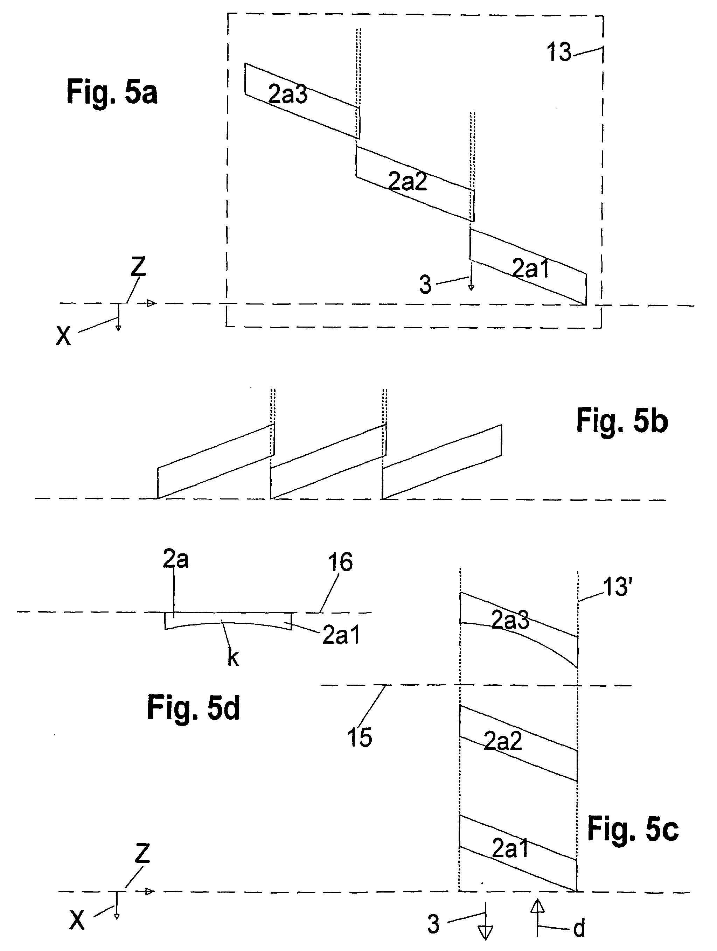

Die Figuren 5 zeigen - wiederum in radialer Aufsicht auf das Werkstück - die Bearbeitung einer Fläche 1a mit mehreren Schneiden 2a1, 2a2....

Gemäß Figur 5a sind dies zeitlich hintereinander zum Einsatz kommende Schneiden 2a1, 2a2, was z.B. dann notwendig wird, wenn die Bearbeitung mittels nur einer einzigen Schneide nicht mehr unter Einhaltung des gewünschten Optimierungszieles möglich ist.

In Fig. 5a sind diese Schneiden 2a1, 2a2... einerseits in tangentialer Richtung x zueinander versetzt, sodass die nächste Schneide erst in Eingriff gelangt, wenn die vorhergehende Schneide außer Eingriff ist. Zusätzlich ist dabei ein Versatz in axialer Richtung (Z-Richtung) gegeben, wobei sich in dieser Richtung die Schneiden 2a1, 2a2... noch jeweils geringfügig überlappen können.

Die Schneiden 2a1, 2a2... sind z.B. an einem gemeinsamen Werkzeuggrundkörper 13 befestigt, der wenigstens in X- und Z-Richtung, vorzugsweise - zur Herstellung von nichtzylindrischen Flächen - auch in der Y-Richtung jeweils unabhängig voneinander gesteuert werden kann.

Dagegen sind bei der Lösung gemäß Fig. 5b - die wiederum eine Darstellung in radialer Aufsicht, also in Y-Richtung, ist - die Schneiden 2a1, 2a2... hauptsächlich in axialer Richtung Z zueinander versetzt, hierbei wiederum vorzugsweise in Z-Richtung noch geringfügig überlappend. In tangentialer Richtung, der X-Richtung, liegt dagegen kein oder ein nur minimaler Versatz vor, der das gleichzeitige erstmalige Kontaktieren aller Schneiden 2a1, 2a2... an der Fläche 1 a des Werkstükkes verhindern soll. Ein Versatz der Schneiden in der tangentialen X-Richtung kann dann vermieden werden, wenn die Schrägstellung der Schneiden 2a1, 2a2 bezogen auf ihre Längserstreckung so groß ist, dass der Versatz einer Schneide vom Anfang bis zum Ende in X-Richtung größer ist als der Querschnitt der nächsten Schneide in dieser Richtung in ihrem Anfangsbereich.

Der Vorteil dieser Lösung liegt darin, dass eine sehr große Fläche 1a mit nur einem geringen Vorschubweg, also in sehr kurzer Zeit, fertig bearbeitet werden kann, während bei zusätzlicher Abfolge in X-Richtung der Schneiden 2a1, 2a2... hintereinander ein wesentlich größerer Vorschubweg benötigt wird, um alle diese Schneiden dann zeitlich nacheinander in Einsatz zu bringen.

Dagegen sind bei Fig. 5c mehrere Schneiden 2a1, 2a2... - wiederum in der radialen Aufsicht, also in Y-Richtung betrachtet - auf gleicher Z-Position, also in der tangentialen X-Richtung hintereinander, angeordnet, und verlaufen insbesondere parallel zueinander, weisen also den selben Schrägstellungswinkel a auf. Diese Schneiden können auf einem in den zwei oder gar drei Raumrichtungen X, Z und ggf. Y verfahrbaren Werkzeuggrundkörper befestigt sein oder auch über den Umfang eines scheibenförmigen Werkzeuggrundkörpers, dessen Rotationsachse vorzugsweise parallel zur Z-Richtung verläuft, versetzt angeordnet sein, wobei dann die Fig. 5 eine Abwicklung wenigstens eines Teils dieses Umfanges darstellt.

Um die einzelnen Schneiden nacheinander zur Bearbeitung unterschiedlicher Axialbereiche der Fläche 1a zum Einsatz zu bringen, wird dieser Werkzeuggrundkörper 13' nach außer Eingriff-Bringen einer Schneide z.B. 2a1 und vor in Eingriff-Bringen der nächsten Schneide 2a2 um den entsprechenden Schwenkwinkel um die Schwenkachse 15 des Werkzeuggrundkörpers 13' verschwenkt und zusätzlich in axialer Richtung versetzt.

Während der Bearbeitung des Werkstückes ist die Schwenkbewegung des scheibenförmigen Werkzeuggrundkörpers 13' stillgesetzt, und der Werkzeuggrundkörper vollzieht ausschließlich lineare Bewegungskomponenten in Z-, X- und ggf. Y-Richtung.

Natürlich können diese auf der gleichen Axialposition liegenden Schneiden der Fig. 5c auch hintereinander ohne axiale Bewegung dazwischen nacheinander an der gleichen Fläche zum Einsatz kommen, was insbesondere dann sinnvoll ist, wenn die Schneiden aufeinander abfolgende Bearbeitungsstufen, also beispielsweise Schruppen, Schlichten und Feinschlichten, durchführen.

Dabei ist am Beispiel einer einzelnen Schneide 2a3 dargestellt, dass eine solche Schneide - in der radialen Aufsicht der Figur 5c betrachtet - keineswegs gerade ausgebildet sein muss, sondern auch bogenförmig, beispielsweise konkav aber auch konvex, geformt sein kann.

Zusätzlich oder stattdessen kann eine solche Schneide auch - betrachtet in der Vorschubrichtung, also gemäß Fig. 5c in der Tangentialrichtung X - eine Schneidkante k aufweisen, die nicht in der Vorschubebene - welche gebildet wird aus der Vorschubrichtung 3 und der Hauptverlaufsrichtung der Schneiden 2a - sondern gegenüber dieser Vorschubebene 16 gewölbt ist.

BEZUGSZEICHENLISTE

| | |
|---|---|
| 1 | Werkstück |
| 1a | rotationssymmetrische Fläche |
| 2 | Werkzeug |
| 2a | Schneide |
| 3, 3' | Vorschubbewegung |
| 4 | Tangente |
| 5 | Riefe |
| 6 | Grat |
| 7 | Drehrichtung |
| 8 | Arbeitslinie |
| 10 | Z-Richtung, Rotationsachse |
| 11 | X-Richtung |
| 12 | Y-Richtung |
| 13 | Werkzeuggrundkörper |
| 14 | Schwenkachse |
| 15 | Schwenkachse |
| 16 | Vorschubebene |
| f | Räumvorschub |
| $\alpha$ | Schrägstellungswinkel |
| r | Werstückradius |
| s | Drallsteigung |
| t | Dralltiefe |
| b | Breite der Fläche 1 a |
| $R_z$ | Rauhtiefe |
| K | Schneidkante |

**Patentansprüche**

1. Verfahren zum spanenden Bearbeiten von rotationssymmetrischen Flächen (1 a) an einem rotierenden Werkstück (1), wobei

   - wenigstens eine bzgl. der Rotationsachse (10) des Werkstückes (1) windschiefe Schneide (2a) in einer Vorschubbewegung (3, 3') am rotierenden Werkstück (1) kontaktierend entlang geführt wird,

   - wobei die Bearbeitungsparameter, insbesondere der in Vorschubrichtung (3) verlaufende Vorschub (f) und die Schrägstellung ($\alpha$) der Schneide (2a) gegenüber der Längsrichtung (Z), der Rotationsachse (10) so gewählt werden, dass der an der bearbeiteten Fläche (1 a) auftretende Drall hinsichtlich Drallsteigung (s) und/oder Dralltiefe (t) minimal wird, insbesondere die Dralltiefe (t) minimal wird, und

   - die Vorschubbewegung (3, 3') eine axiale Bewegung (3z, 3'z) umfasst,

   - die Vorschubbewegung (3, 3') eine tangentialen Bewegung (3x, 3'x) umfasst,

   - die Vorschubbewegung (3, 3') in einer Tangentialebene der rotationssymmetrischen Fläche (1a) erfolgt,

**dadurch gekennzeichnet, dass**

- die tangentiale Bewegung (3x, 3'x) und die axiale Bewegung (3z, 3'z) der Vorschubbewegung unabhängig voneinander gesteuert werden.

2. Verfahren zum spanenden Bearbeiten von rotationssymmetrischen Flächen (1a) an einem rotierenden Werkstück (1), wobei

- wenigstens eine bzgl. der Rotationsachse (10) des Werkstückes (1) windschiefe Schneide (2a) in einer Vorschubbewegung (3, 3') am rotierenden Werkstück (1) kontaktierend entlang geführt wird und
- die Bearbeitungsparameter, insbesondere der in Vorschubrichtung (3) verlaufende Vorschub (f) bei der Bearbeitung einer gehärteten, rotationssymmetrischen Fläche (1 a) so gewählt werden, dass die sich ergebende Zerspanungsleistung maximal wird, und
- die Vorschubbewegung (3, 3') eine axiale Bewegung (3z, 3'z) umfasst,
- die Vorschubbewegung (3, 3') eine tangentiale Bewegung (3x, 3'x) umfasst,
- die Vorschubbewegung (3, 3') in einer Tangentialebene der rotationssymmetrischen Fläche (1a) erfolgt,

**dadurch gekennzeichnet, dass**

- die tangentiale Bewegung (3x, 3'x) und die axiale Bewegung (3z, 3'z) der Vorschubbewegung unabhängig voneinander gesteuert werden.

3. Verfahren nach einem der vorhergehenden Ansprüche
**dadurch gekennzeichnet, dass**
die Schneide (2a) in der Tangentialebene liegt, in der die lineare Vorschubbewegung (3, 3') erfolgt.

4. Verfahren nach einem der vorhergehenden Ansprüche
**dadurch gekennzeichnet, dass**
die Bearbeitungsparameter, insbesondere die Relation bzw. Veränderung der Relation der tangentialen Bewegung (3x, 3'x) zur axialen Bewegung (3z, 3'z) so gesteuert wird, dass die gesamte Länge der Schneide (2a) zum Einsatz kommt, und insbesondere so, dass der Verschleiß der Schneide (2a) über deren Länge gleichmäßig ist, und insbesondere die Summe der von der Schneide (2a) zu bewältigenden Bearbeitungsvorgänge, maximal ist.

5. Verfahren nach einem der vorhergehenden Ansprüche
**dadurch gekennzeichnet, dass**
die Schneide (2a) eine in sich gerade Schneide ist.

6. Verfahren nach einem der vorhergehenden Ansprüche
**dadurch gekennzeichnet, dass**
die rotationssymmetrische Fläche (1 a) ein Zylinder oder ein Kegel ist und die lineare Vorschubbewegung (3, 3') in der Tangentialebene des Zylinders oder Kegels erfolgt.

7. Verfahren nach einem der vorhergehenden Ansprüche
**dadurch gekennzeichnet, dass**
die rotationssymmetrische Fläche einem Längsschnitt konkav oder konvex gekrümmte Fläche ist und die Schneide (2a) eine gerade Schneide ist, die zusätzlich zur tangentialen Bewegung (3x) und axialen Bewegung (3z) einer radialen Bewegung (3y) während des Kontaktierens des Werkstückes (1) unterworfen wird.

8. Verfahren nach einem der vorhergehenden Ansprüche
**dadurch gekennzeichnet, dass**
die Schrägstellung ($\alpha$) der Schneide (2a) gegenüber der Rotationsachse (10) zwischen 0° und 90°, insbesondere zwischen 20° und 50°, beträgt.

9. Verfahren nach einem der vorhergehenden Ansprüche
**dadurch gekennzeichnet, dass**
der Vorschub (f) relativ zur Schrägstellung ($\alpha$) der Schneide (2a), dem Durchmesser der zu bearbeitenden rotationssymmetrischen Fläche (1a) sowie der Schnittgeschwindigkeit so gewählt wird, dass die auf der Oberfläche des Werkstückes (1) durch die Bearbeitung entstehenden Riefen (5) hinsichtlich Drallsteigung (s) und Dralltiefe (d) keinen bzw. einen vemachlässigbar geringen Gewindeeffekt aufweisen.

10. Verfahren nach einem der vorhergehenden Ansprüche
**dadurch gekennzeichnet, dass**
bei Einsatz mehrerer windschiefer Schneiden (2a1, 2a2) seitlich zueinander diese Schneiden (2a1, 2a2) axial zueinander versetzt, insbesondere überlappend, auf dem gleichen Werkzeuggrundkörper, insbesondere dem Umfang eines scheibenförmigen Werkzeuggrundkörpers, angeordnet werden.

11. Verfahren nach einem der vorhergehenden Ansprüche
**dadurch gekennzeichnet, dass**
bei Einsatz mehrerer windschiefer Schneiden (2a1, 2a2) seitlich zueinander diese Schneiden (2a1, 2a2) in tangentialer Richtung zueinander versetzt, insbesondere in Umfangsrichtung eines scheibenförmigen Grundkörpers (13) zueinander versetzt, angeordnet werden.

12. Verfahren nach einem der vorhergehenden Ansprüche
**dadurch gekennzeichnet, dass**
die Vorschubbewegung (3) eine lineare Bewegung ist.

13. Verfahren nach einem der vorhergehenden Ansprüche
**dadurch gekennzeichnet, dass**
an der selben Fläche (1a) des Werkstückes nacheinander Schruppschneiden und Schlichtschneiden zum Einsatz kommen.

14. Verfahren nach einem der vorhergehenden Ansprüche
**dadurch gekennzeichnet, dass**
mit ein und derselben Schneide (2a), die insbesondere aus CBN und/oder Hartmetall besteht, sowohl gehärtete als auch ungehärtete Werkstücke und insbesondere an ein und demselben Werkstück gehärtete und ungehärtete Bereich, insbesondere einschließlich der Übergang vom gehärteten zum ungehärteten Bereich und umgekehrt, bearbeitet werden.

**Claims**

1. Procedure for steel cutting the rotation symmetrical surfaces (1a) of a rotating workpiece (1), whereupon:

   - at least a cutter (2a), obliquely arranged with respect to the rotation axis (10) of the workpiece (1), is shifted into a feed motion (3, 3') thus that to be in contact along the rotating workpiece (1) and
   - the machining parameters, in particular the lead (f) taking place in the direction of the feed motion (3), and the oblique positioning a of the cutter (2a) with respect to the longitudinal direction (Z) of the rotation axis (10), are thus chosen that the twist appearing on the machined surface (1a) turn minimum as to the twist pitch (s) and/or the twist depth (t), in particular the twist depth (t) turn minimum, and
   - the feed motion (3, 3') comprises an axial motion (3z, 3'z),
   - the feed motion (3, 3') comprises a tangential motion (3x, 3'x),
   - the feed motion (3, 3') takes place in a tangential plane of the rotation symmetrical surface (1a),

   **characterized in that**

   - the tangential motion (3x, 3'x) and the axial motion (3z, 3'z) of the feed motion are independently controlled one with respect to the other.

2. Procedure for steel cutting the rotation symmetrical surfaces (1a) of a rotating workpiece (1), whereupon:

   - at least a cutter (2a), obliquely arranged with respect to the rotation axis (10) of the workpiece (1), is shifted into a feed motion (3, 3') thus that to be in contact along the rotating workpiece (1) and
   - the machining parameters, in particular the lead (f) taking place in the direction of the feed motion (3) on machining a hardened rotation symmetrical surface (1a), are thus chosen that their steel cutting output capacity turn maximum, and
   - the feed motion (3, 3') comprises an axial motion (3z, 3'z),
   - the feed motion (3, 3') comprises a tangential motion (3x, 3'x),
   - the feed motion (3, 3') takes place in a tangential plane of the rotation symmetrical surface (1a),

   **characterized in that**

   - the tangential motion (3x, 3'x) and the axial motion (3z, 3'z) of the feed motion are independently controlled one with respect to the other.

3. Procedure according to any one of the preceding claims **characterized in that**, the cutter (2a) is in a tangential plane, the linear feed motion (3, 3') takes place in.

4. Procedure according to any one of the preceding claims **characterized in that**, the machining parameters, in particular the relationship and the modification of relationship between the tangential motion (3x, 3'x) and the axial motion (3z, 3'z) respectively, is thus controlled that the entire extent of the cutter (2a) be employed, and in particular thus that the wear of the cutter (2a) be constant over its entire extent, and in particular the amount of operations having to be carried out by the cutter (2a) be maximum.

5. Procedure according to any one of the preceding claims **characterized in that**, the cutter (2a) is a straight cutter.

**6.** Procedure according to any one of the preceding claims **characterized in that**, the rotation symmetrical surface (1a) is a cylinder or a cone, and the linear feed motion (3, 3') takes place in the tangential plane of the cylinder or in the tangential plane of the cone.

**7.** Procedure according to any one of the preceding claims **characterized in that**, in longitudinal section, the rotation symmetrical surface is a concavely or convexly curved one, and the cutter (2a) is a straight cutter, which in addition to the tangential motion (3x) and the axial motion (3z), is subjected to a radial motion (3y) while in contact with the workpiece (1).

**8.** Procedure according to any one of the preceding claims **characterized in that**, the oblique positioning a of the cutter (2a) with respect to the rotation axis (10) is between 0° and 90°, in particular between 20° and 50°.

**9.** Procedure according to any one of the preceding claims **characterized in that**, the lead (f) with respect to the oblique positioning a of the cutter (2a), the diameter of the rotation symmetrical surface (1a) to be machined, as well as the rate of cutting will be thus chosen that the grooves (5) appearing by machining on the surface of workpiece (1) have none thread effect, or but a negligible one respectively, as to the twist pitch (s) and the twist depth (t).

**10.** Procedure according to any one of the preceding claims **characterized in that**, on employing more obliquely contiguous cutters (2a1, 2a2...), these cutters (2a1, 2a2...) are arranged axially displaced one with respect to the other, in particular overlapped, on the same cutter holder base body, in particular on the circumference of a disk shaped cutter holder base body (13).

**11.** Procedure according to any one of the preceding claims **characterized in that**, on employing more obliquely contiguous cutters (2a1, 2a2...), these cutters (2a1, 2a2...) are arranged transversely displaced one with respect to the other, in particular displaced one with respect to the other in the circumference direction of a disk shaped cutter holder base body (13).

**12.** Procedure according to any one of the preceding claims **characterized in that**, the feed motion (3) is a linear motion.

**13.** Procedure according to any one of the preceding claims **characterized in that**, on the same surface (1a) of the workpiece, there are successively employed roughing tools and shear tools.

**14.** Procedure according to any one of the preceding claims **characterized in that**, with one and the same cutter (2a), in particular made of CBN and/or hard metal, there may be machined both hardened or non-hardened workpieces, and in particular hardened and non-hardened areas on one and the same workpiece, in particular inclusive the pass from a hardened area to a non-hardened one and inversely.

## Revendications

**1.** Procédé pour l'usinage par enlèvement de copeaux de surfaces symétriques en rotation (1as) sur une pièce à usiner rotative (1),

- au moins un tranchant (2a) voilé par rapport à l'axe de rotation (10) de la pièce à usiner (1) étant guidé dans un mouvement d'avance le long d'un déplacement d'avance (3, 3') en contact avec la pièce d'usinage rotative (1).
- les paramètres d'usinage, en particulier l'avance (f) s'étendant dans le sens d'avance (3) et la position inclinée ($\alpha$) du tranchant (2a) par rapport à la direction longitudinale (Z) de l'axe de rotation (10) étant sélectionnés de sorte que la torsion se produisant sur la surface à usiner (1a) devient minimale, en particulier la profondeur de torsion (t) est minimale, et
- le mouvement d'avance (3, 3') comprend un mouvement axial (3z, 3'z),
- le mouvement d'avance (3, 3') comprend un mouvement tangentiel (3x, 3'x).
- le mouvement d'avance (3, 3') s'effectue dans un plan tangentiel de la surface symétrique en rotation (1a),

**caractérisé en ce que**

- le mouvement tangentiel (3x, 3'x) et le mouvement axial (3z, 3'z) du mouvement d'avance sont commandés indépendamment l'un de l'autre.

**2.** Procédé pour l'usinage par enlèvement de copeaux de surfaces symétriques en rotation (1a) sur une pièce à usiner rotative (1),

- au moins un tranchant (2a) voilé par rapport à l'axe de rotation (10) de la pièce à usiner (1) étant guidé dans un mouvement d'avance le long d'un déplacement d'avance (3, 3') en contact avec la pièce d'usinage rotative (1).
- les paramètres d'usinage, en particulier l'avance (f) s'étendant dans le sens d'avance (3) lors de l'usinage d'une surface symétrique en rotation trempée (1a) sont sélectionnés de sorte qu'il en résulte un rendement maximal d'enlèvement de copeaux, et

- le mouvement d'avance (3, 3') comprend un mouvement axial (3z, 3'z),
- le mouvement d'avance (3, 3') comprend un mouvement tangentiel (3x, 3'x),
- le mouvement d'avance (3, 3') s'effectue dans un plan tangentiel de la surface symétrique en rotation (1a),

**caractérisé en ce que**

- le mouvement tangentiel (3x, 3'x) et le mouvement axial (3z, 3'z) du mouvement d'avance sont commandés indépendamment l'un de l'autre.

3. Procédé selon l'une des revendications précédentes, **caractérisé en ce que** la lame (2a) s'effectue dans le plan tangentiel dans lequel s'effectue le mouvement linéaire d'avance (3, 3').

4. Procédé selon l'une des revendications précédentes, **caractérisé en ce que** les paramètres d'usinage, en particulier la relation respectivement la modification de la relation du mouvement tangentiel (3x, 3'x) par rapport au mouvement axial (3z, 3'z) sont commandés de sorte que l'ensemble de la longueur du tranchant (2a) est utilisée, en particulier de sorte que l'usure du tranchant (2a) est uniforme sur sa longueur et en particulier la somme des opérations d'usinage à effectuer par le tranchant (2a) est maximale.

5. Procédé selon l'une des revendications précédentes, **caractérisé en ce que** le tranchant (2a) est un tranchant rectiligne.

6. Procédé selon l'une des revendications précédentes, **caractérisé en ce que** la surface symétrique en rotation (1a) est un cylindre ou un tronc conique et le mouvement d'avance linéaire (3, 3') s'effectue dans le plan tangentiel du cylindre ou d'un trou conique.

7. Procédé selon l'une des revendications précédentes, **caractérisé en ce que** la surface symétrique en rotation est une surface incurvée concave ou convexe par rapport à la coupe longitudinale et le tranchant (2a) est un tranchant droit qui en supplément du mouvement tangentiel (3x) et au mouvement axial (3z) subit un mouvement radial (3y) pendant le contact de la pièce d'usinage (1).

8. Procédé selon l'une des revendications précédentes, **caractérisé en ce que** la position inclinée ($\alpha$) du tranchant (2a) par rapport à l'axe de rotation (10) est comprise entre 0° et 90°, en particulier entre 20° et 50°.

9. Procédé selon l'une des revendications précédentes, **caractérisé en ce que** l'avance (f) par rapport à la position inclinée ($\alpha$) du tranchant (2a), au diamètre de la surface symétrique en rotation à usiner (1a) ainsi qu'à la vitesse de coupe est sélectionné de sorte que les stries résultant de l'usinage sur la surface de la pièce à usiner (1) ne présentent par rapport au pas de torsion (s) et à la profondeur de torsion (d) aucun effet de filetage ou que de manière négligeable.

10. Procédé selon l'une des revendications précédentes, **caractérisé en ce que** lors de l'emploi de plusieurs tranchants voilés (2a1, 2a2), ces tranchants (2a1, 2a2) sont disposés décalés axialement et latéralement entre eux, en particulier en se chevauchant et sur le même corps de base d'outil en particulier sur la périphérie d'un corps de base d'outil en forme de disque.

11. Procédé selon l'une des revendications précédentes, **caractérisé en ce que** lors de l'emploi de plusieurs tranchants voilés (2a1, 2a2), ces tranchants (2a1, 2a2)sont disposés décalés latéralement entre eux dans le sens tangentiel, en particulier dans le sens périphérique d'un corps de base d'outil en forme de disque (13).

12. Procédé selon l'une des revendications précédentes, **caractérisé en ce que** le mouvement d'avance (3) est un mouvement linéaire.

13. Procédé selon l'une des revendications précédentes, **caractérisé en ce que** sur la même surface (1a) de la pièce à usiner, des tranchants d'ébauche et des tranchants de finition sont utilisés.

14. Procédé selon l'une des revendications précédentes, **caractérisé en ce qu'**avec une seule et même lame (2a) qui se compose en particulier de métal dur et/ou de CBN, des pièces à usinées trempées et non trempées et en particulier sur la même pièce à usiner, des zones trempées et non trempées, en particulier y compris à la transition entre la zone trempée et la zone non trempée et inversement sont usinées.

y x z

2a

10

3

2

α

3'

1a

4

b

3, 3'

1

1

7

Fig. 1a

Fig. 1

EP 1 427 557 B1

**Fig. 2**

EP 1 427 557 B1

**Fig. 3**

EP 1 427 557 B1

B A
y x
z
C

10

2a

3y1
3z1
3x1

2

3x2
3z2

3x3
3z3

1a

1

14

2a

2

7

1a

Fig. 4a

Fig. 4

EP 1 427 557 B1

Y Z

X

1a

Fig. 4b

3' 3"

3

Fig. 4c

3'''

3z1 gehärtet | ungehärtet | gehärtet 3z3

Fig. 4d

3''''

3x2

EP 1 427 557 B1

**Fig. 5a**

13

2a3

2a2

2a1

3

Z

X

**Fig. 5b**

**Fig. 5d**

2a

16

2a1

k

15

13'

2a3

2a2

**Fig. 5c**

2a1

Z

X

3

d